# EUROPEAN PATENT SPECIFICATION

(11) **EP 3 653 422 B1**
(45) Date of publication and mention of the grant of the patent: **21.07.2021**
(21) Application number: 18846272.5
(22) Date of filing: 01.08.2018
(51) Int. Cl.: B60K 13/02, F02M 35/10, F02M 35/16, B60R 13/08, B62D 25/08

(54) **VEHICULAR ENGINE ROOM STRUCTURE**
FAHRZEUGMOTORRAUMSTRUKTUR
STRUCTURE DE COMPARTIMENT DE MOTEUR DE VÉHICULE

(30) Priority: 14.08.2017 JP 2017156598; 14.08.2017 JP 2017156599
(43) Date of publication of application: 20.05.2020
(73) Proprietor: Mazda Motor Corporation, Aki-gun Hiroshima 730-8670 (JP)
(72) Inventor: HARADA, Satoshi, Isehara-shi Kanagawa 259-1114 (JP); IWASAKI, Yousuke, Aki-gun Hiroshima 730-8670 (JP); KISHI, Osamu, Aki-gun Hiroshima 730-8670 (JP); HARADA, Masaki, Aki-gun Hiroshima 730-8670 (JP); ARIKI, Motohiro, Aki-gun Hiroshima 730-8670 (JP); TAKAMURA, Yuta, Aki-gun Hiroshima 730-8670 (JP); TASHIRO, Kuniyoshi, Aki-gun Hiroshima 730-8670 (JP); WATANABE, Shigeaki, Aki-gun Hiroshima 730-8670 (JP); YAMAUCHI, Kazuki, Aki-gun Hiroshima 730-8670 (JP); KASUGA, Yoshiyuki, Aki-gun Hiroshima 730-8670 (JP)
(74) Representative: Behr, Wolfgang
(86) International application number: PCT/JP2018/028831
(87) International publication number: WO 2019/035356

(56) References cited:
- EP-A1- 2 860 384
- DE-A1- 10 257 857
- JP-A- 2008 267 218
- JP-A- 2009 074 243
- JP-A- 2009 190 444
- JP-A- 2017 115 540
- JP-U- H0 429 455
- JP-U- H0 647 627
- JP-U- S61 190 464

## Description

### TECHNICAL FIELD

The present invention relates to an engine room structure of a vehicle.

### BACKGROUND ART

Various devices such as an engine and a transmission are situated in an engine room. Large sound may be generated from these devices situated in the engine room. JP H11-125158 A teaches arranging a sound insulation cover in the engine room to block transmission of sound generated in the engine room.

The sound insulation cover in JP H11-125158 A is attached to the engine. An intake passage is formed in a position adjacent to the engine and the sound insulation cover to supply air to a combustion chamber of the engine. In short, the intake passage of JP H11-125158 A is partially surrounded by the engine and the sound insulation cover.

The sound insulation cover has not only sound insulation characteristics but also heat insulation characteristics to some extent. Therefore, the sound insulation cover of JP H11-125158 A exhibits an effect to accumulate heat generated from the engine in an area in which the intake passage is formed. Consequently, air in the intake passage is warmed. This results in a decrease in intake charge density.

The intake passage in JP H11-125158 A is formed in a wide space on a side of the engine. However, since many devices are densely arranged in the engine room, it may be difficult to apply a design of the intake passage of Patent Document 1 to some types of vehichles.

Documents JP 2009 074243 A shows an engine room structure according to the preamble of claim 1. A further engine room structure is known from document EP 2 860 384 A1.

### SUMMARY OF INVENTION

An object of the present invention is to provide an engine room structure applicable to various types of vehicles without causing an excessive decrease in intake charge density.

An engine room structure for a vehicle according to the present invention includes: a partitioning wall configured to partition a storage space in which an engine is storable from a piping space in which an intake passage for supplying air to a combustion chamber of the engine; and an intake pipe which partially forms the intake passage in the piping space. The intake pipe extends along the partitioning wall, the intake pipe being integrally formed with the partitioning wall.

The engine room structure is applicable to various types of vehicles without causing an excessive decrease in intake charge density. The present invention further comprises a vehicle comprising the engine room structure.

The objects, features and advantageous effects of the present invention will become more apparent by the following detailed description and the accompanying drawings.

### BRIEF DESCRIPTION OF DRAWINGS

FIG. 1 is a schematic plan view of an exemplary engine room structure.
FIG. 2 is another schematic plan view of the engine room structure shown in FIG. 1.
FIG. 3 is an enlarged horizontal cross-sectional view of a partitioning wall around a separation wall of the engine room structure shown in FIG. 2.
FIG. 4 is another schematic plan view of the engine room structure shown in FIG. 1.
FIG. 5 is an enlarged horizontal cross-sectional view of a partitioning wall around a separation wall of the engine room structure shown in FIG. 4.
FIG. 6 is a schematic vertical cross-sectional view of the partitioning wall of the engine room structure shown in FIG. 1.
FIG. 7 is another schematic vertical cross-sectional view of the partitioning wall of the engine room structure shown in FIG. 1.

### DESCRIPTION OF EMBODIMENTS

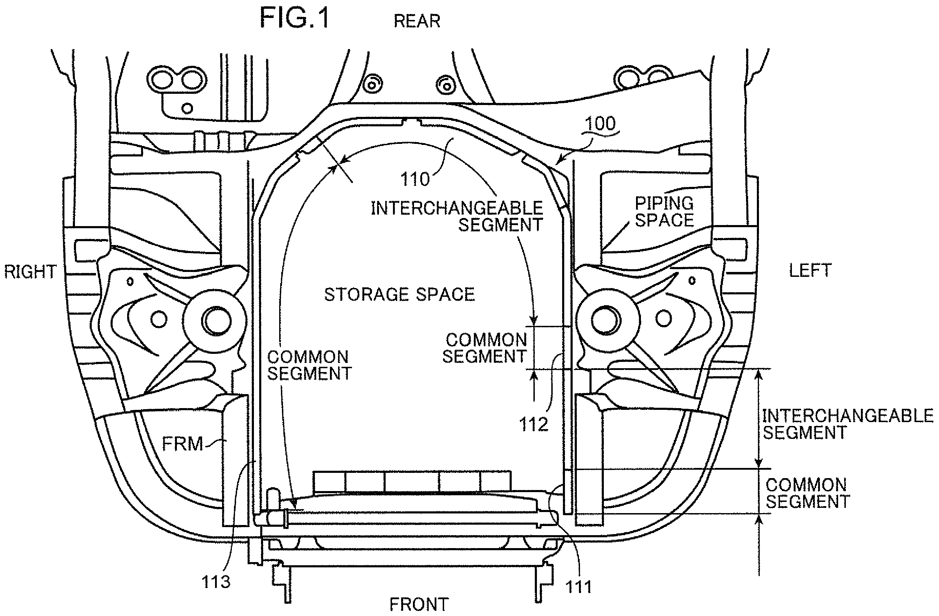

FIG. 1 is a schematic plan view of an exemplary engine room structure 100 of a vehicle. The engine room structure 100 is described with reference to FIG. 1. The directional terms such as "front", "rear", "left" and "right" in the following description are the same as the definition on directions that are generally used for a vehicle. The principles of the present embodiment are not limited by these directional terms.

The engine room structure 100 includes a partitioning wall 110, and an intake pipe (not shown) which partially forms an intake passage (not shown) to supply air to a combustion chamber of an engine (not shown). The partitioning wall 110 partitions a storage space in which the engine is stored from a piping space in which the intake passage to the engine is mainly formed. The partitioning wall 110 has high sound insulation characteristics and high heat insulation characteristics. Therefore, sound and heat generated from the engine is less likely to be transferred to the piping space. Consequently, the vehicle may run quietly. In addition, an intake charge density of air to be drawn to the engine is kept to a high level.

The partitioning wall 110 according to the present embodiment is fixed to a frame FRM situated in the engine room of the vehicle. Alternatively, the partitioning wall 110 may be fixed to another portion in the engine room. The principles of the present embodiment are not limited to a specific position for fixing the partitioning wall 110.

The partitioning wall 110 is divided into three common segments and two interchangeable segments. The partitioning wall 110 includes common walls 111, 112, 113 respectively used as the three common segments. The common wall 111 and the common wall 112 behind the common wall 111 form a part of a left wall (wall portion on the left of the engine) of the partitioning wall 110. The common wall 113 faces the common walls 111, 112 to form a right wall (wall portion on the right of the engine) of the partitioning wall 110. One of the two interchangeable segments is formed between the common walls 111, 112. The other of the two interchangeable segments is formed between the common walls 112, 113.

Wall members which are different in shape are prepared for each of the two interchangeable segments. A wall member to be situated in the interchangeable segment is selected from these wall members so as to fit a layout, a shape or a size of the engine in the storage space. On the other hand, the common walls 111, 112, 113 are used in common among various types of vehicles. Therefore, a manufacturer manufacturing vehicles may form the partitioning wall 110 appropriate for each of the vehicles by using wall members of a small number of types.

The intake passage for supplying air to a combustion chamber of an engine depends on a design of an engine room of a vehicle. Generally, since traveling air of a vehicle is supplied to an engine, air to be supplied to the engine is cleaned by an air cleaner (not shown) situated on a front portion of an engine room.

A front end of each of the common walls 111, 113 is situated near a front end of the vehicle itself, so that leakage of sound and heat from the storage space is reduced as much as possible. When an air cleaner is situated between the common walls 111, 113, the air cleaner is situated in the storage space together with the engine. In this case, a temperature of air cleaned by the air cleaner rises because of heat from the engine. This results in a decrease in intake charge density of air to be supplied to the engine. Therefore, it is preferable that the air clear is situated in a piping space. In this case, transfer of heat from the engine to the air cleaner is blocked by the partitioning wall 110.

The intake pipe forming a part of an intake passage in the piping space extends from the air cleaner situated in the piping space. The intake pipe is connected to one of the wall members situated in the interchangeable segment. A connecting position at which the intake pipe is connected to the partitioning wall 110 depends on a design of the engine room of the vehicle. Therefore, some of the wall members situated in the interchangeable segments may or may not have a connecting portion to the intake pipe. The layout of various intake passages is described below.

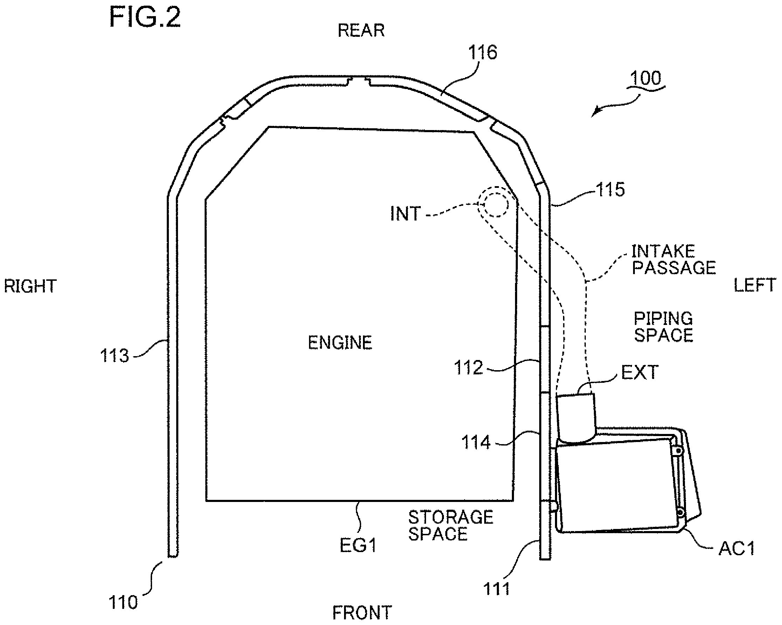

FIG. 2 is a schematic plan view of the engine room structure 100. The engine room structure 100 is described with reference to FIGS. 1 and 2.

FIG. 2 schematically shows an engine EG1 and an air cleaner AC1 in addition to the partitioning wall 110. FIG. 2 shows separation walls 114, 115, 116 as the partitioning wall 110 in addition to the common walls 111, 112, 113.

The separation wall 114 is situated between the common walls 111, 112. The separation wall 114 is separable from the common walls 111, 112. The separation wall 115 is situated between the common wall 112 and the separation wall 116. The separation wall 115 is separable from the common wall 111 and the separation wall 116. The separation wall 116 is situated between the separation wall 115 and the common wall 113. The separation wall 116 is separable from the separation wall 115 and the common wall 113.

As described above, the common wall 113 forms a right lateral wall portion of the partitioning wall 110. The common walls 111, 112 and the separation walls 114, 115 face the common wall 113 to form a left lateral wall portion of the partitioning wall 110. The separation wall 116 extends between the left and right lateral wall portions behind the engine EG1. The separation wall 116 forms an arcuate contour which is curved rearward.

The air cleaner AC1 is adjacent to the left of the common wall 111 and the separation wall 114. The air cleaner AC1 may be fixed to the partitioning wall 110 or the frame FRM (c.f. FIG. 1) extending below the air cleaner AC1. The principles of the present embodiment are not limited to a position at which the air cleaner AC1 is fixed.

A discharge port EXT of the air cleaner AC1 is situated near a boundary between the common wall 112 and the separation wall 114. An intake port INT of the engine EG1 is situated near a boundary between the separation walls 115, 116.

The following table shows exemplary conditions for designing an intake passage extending from the discharge port EXT to the intake port INT. A designer may design the intake passage, taking into consideration of the conditions shown in the following table.

**[Table 1]**

| | |
|---|---|
| Condition 1: | The entire length of the intake passage becomes short. |
| Condition 2: | The length of the intake passage is preferentially allocated in the piping space rather than the storage space. |

As a result of the condition 1, a flow loss of air flowing from the air cleaner AC1 to the engine EG1 becomes a low value. As a result of the condition 2, a heat transfer amount to air flowing from the engine EG1 along the intake passage becomes a low value. Consequently, a high intake charge density is maintained. With regard to the layout of the intake passage shown in FIG. 2, the intake passage preferably extends through the separation wall 115 under these design conditions. Therefore, the separation wall 115 has an opening structure which has a through-hole to form the intake passage. On the other hand, no through-hole is formed in the separation walls 114, 116, like the common walls 111, 112, 113.

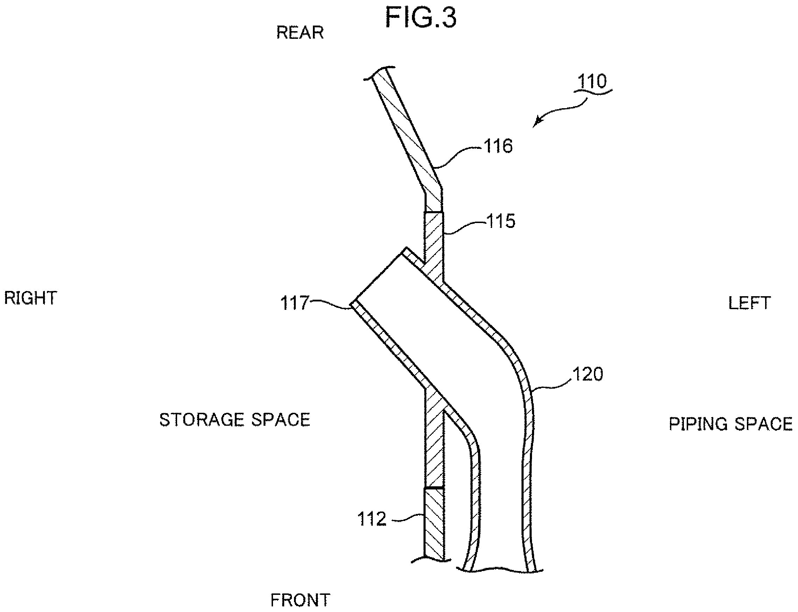

FIG. 3 is an enlarged horizontal cross-sectional view of the partitioning wall 110 around the separation wall 115. The engine room structure 100 is further described with reference to FIGS. 2 and 3.

The engine room structure 110 further includes an intake pipe 120. The intake pipe 120 extends leftward from the left surface (i.e. an outer surface: a surface facing the piping space) of the separation wall 115, and is bent forward (i.e. bent toward the discharge port EXT (c.f. FIG. 2) of the air cleaner AC1 (c.f. FIG. 2)). The proximal end (i.e. the downstream end in a flow direction of air discharged from the air cleaner AC1) of the intake pipe 120 is integrally formed with the left surface of the separation wall 115. The distal end (i.e. the upstream end in the flow direction of air discharged from the air cleaner AC1) of the intake pipe 120 may be connected to the discharge port EXT of the air cleaner AC1 by a hose (not shown). Alternatively, the distal end of the intake pipe 120 may be directly connected to the discharge port EXT of the air cleaner AC1. As a result of the connection of the intake pipe 120 to the discharge port EXT of the air cleaner AC1, the intake passage (c.f. FIG. 2) is formed in the piping space. The principles of the present embodiment are not limited by how the distal end of the intake pipe 120 is connected to the discharge port EXT of the air cleaner AC1.

The proximal end of the intake pipe 120 is integrally formed with the separation wall 115, and the distal end of the intake pipe 120 or a hose connected to the distal end of the intake pipe 120 is fixed to the air cleaner AC1 at the discharge port EXT. Therefore, the intake passage formed by the intake pipe 120 (and the hose) extends along the common wall 112 and the separation wall 115 which form a part of the left lateral wall of the partitioning wall 110. In addition, the intake passage formed in the piping space is stably held by the separation wall 115 and the air cleaner AC 1.

The partitioning wall 110 includes an inner pipe portion 117. The inner pipe portion 117 protrudes obliquely rearward from the right surface of the separation wall 115. In short, since the inner pipe portion 117 protrudes in the storage space toward the intake port INT of the engine EG1, the intake passage in the storage space is shortened. Therefore, heat generated from the engine EG1 does not cause an excessive rise in temperature of air in the inner pipe portion 117. Consequently, an intake charge density of air to be drawn to the engine EG1 is kept to a high level.

The inner pipe portion 117 forms the intake passage in cooperation with the intake pipe 120. The through-hole extending through the separation wall 115 is formed in a boundary between the intake pipe 120 and the inner pipe portion 117. Air which has been cleaned by the air cleaner AC1 may flow in the intake port INT of the engine EG1 through the intake pipe 120 and the inner pipe portion 117.

The inner pipe portion 117 may be connected to the intake port INT of the engine EG1 by a bellows pipe (not shown). In this case, since the bellows pipe attenuates vibration from the engine EG1, vibration of the partitioning wall 110 is suppressed to a low level.

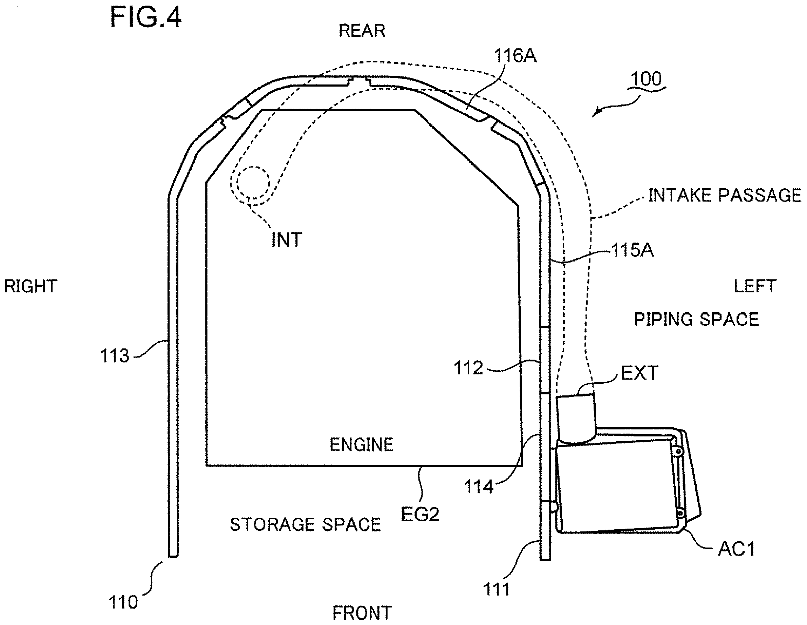

FIG. 4 is a schematic plan view of the engine room structure 100. The engine room structure 100 is described with reference to FIGS. 2 and 4.

Like FIG. 2, FIG. 4 shows the air cleaner AC1 and the partitioning wall 110. FIG. 4 shows the common walls 111, 112, 113 and the separation wall 114 as the partitioning wall 110. The description with reference to FIG. 2 is applied to these elements.

FIG. 4 further shows separation walls 115A, 116A as the partitioning wall 110. The separation wall 115A is used instead of the separation wall 115 described with reference to FIG. 2. Unlike the separation wall 115, a through-hole for forming the intake passage is not formed in the separation wall 115A. The separation wall 116A is used instead of the separation wall 116 described with reference to FIG. 2. Unlike the separation wall 116, a through-hole for forming the intake passage is formed in the separation wall 116A.

FIG. 4 shows an engine EG2 situated in the storage space. The engine EG2 is different from the engine EG1 described with reference to FIG. 2 in terms of a position of the intake port INT. The intake port INT of the engine EG2 is situated near a boundary between the common wall 113 and the separation wall 116A. Therefore, when the design conditions of table 1 are taken into consideration, it is preferable that a through-hole is formed in the separation wall 116A to form an intake passage.

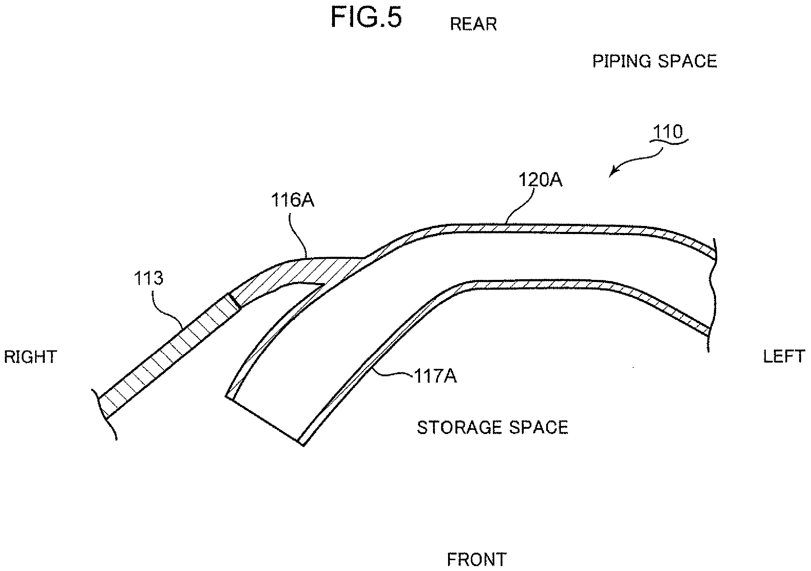

FIG. 5 is an enlarged horizontal cross-sectional view of the partitioning wall 110 around the separation wall 116A. The engine room structure 100 is further described with reference to FIGS. 3 to 5.

FIG. 5 shows an intake pipe 120A which forms a part of the intake passage (c.f. FIG. 4) extending from the discharge port EXT of the air cleaner AC1 fixed on the left of the common wall 111 and the separation wall 114 toward the intake port INT of the engine EG2. Unlike the intake pipe 120 (c.f. FIG. 3) which is distant from the left surface (outer surface) of the separation wall 115 except for the proximal end, the intake pipe 120A forms a part of the rear surface (outer surface) of the separation wall 116A, and a part of the front surface (inner surface: a surface facing the storage space) of the separation wall 116A. In short, the intake pipe 120A is integrally formed with the separation wall 116A over a length (zone) of a part of the intake passage. The intake passage shown by the dotted line in FIG. 4 may be interpreted as a portion in which the intake pipe 120A is integrally formed with the separation wall 116A over a length (zone) of the intake pipe 120A overlapping the separation wall 116A. The intake pipe 120A further extends leftward from the zone over which the intake pipe 120A is integrally formed with the separation wall 116A. Consequently, the intake pipe 120A protrudes into the storage space from the outer surface of the separation wall 116A. A hose and another pipe member may be connected to the protruding portion of the intake pipe 120A from the separation wall 116A, and to the discharge port EXT of the air cleaner AC1, to form an intake passage in the piping space. Alternatively, the intake pipe 120A may be bent forward from the protruding portion of the separation wall 116A, so that the intake passage in the piping space may be formed by being directly connected to the discharge port EXT of the air cleaner AC1. As shown in FIG. 4, the intake passage extends along the outer surface of the partitioning wall 110 (i.e. a part of the common wall 112, the separation wall 115A and the separation wall 116A) over a zone from the discharge port EXT of the air cleaner AC1 to an area in which the intake passage overlaps the separation wall 116A. In this zone, the intake passage is formed near the partitioning wall 110. Therefore, even under a design in which components of the vehicle are densely arranged in the left area of the partitioning wall 110, it is easy to form the intake passage. As described above, the intake passage is integrally formed with the separation wall 116A behind the engine EG2. Therefore, even when a space behind the engine EG2 is narrow, it is easy to form the intake passage. With regard to the layout of the intake passage shown in FIG. 4, the rear wall portion is exemplified by the separation wall 116A.

The partitioning wall 110 includes an inner pipe portion 117A protruding from the inner surface of the separation wall 116A. The inner pipe portion 117A is continuously formed with the intake pipe 120A to form the intake passage in cooperation with the intake pipe 120A, the intake pipe 120A being integrally formed with the separation wall 116A. Therefore, it is possible to flow air, which has been cleaned by the air cleaner AC1, in the inner pipe portion 117A through the intake pipe 120A. The inner pipe portion 117A may be connected to the intake port INT of the engine EG2 by a bellows pipe (not shown). It is possible to flow air in the intake port INT of the engine EG2 through the bellows pipe. Since the bellows pipe may attenuate vibration from the engine EG2, vibration of the partitioning wall 110 is suppressed to a low level.

The inner pipe 117A protrudes obliquely rightward from the front surface of the separation wall 116A. In short, since the inner pipe portion 117A protrudes in the storage space toward the intake port INT of the engine EG2, the intake passage in the storage space is shortened. Therefore, heat generated from the engine EG2 does not cause an excessively rise in temperature of air in the inner pipe portion 117A. Consequently, an intake charge density of air to be drawn to the engine EG2 is kept to a high level.

### <Other features>

A designer may apply various features to the engine room structure 100. The following features do not limit design principles of the engine room structure 100.

### (Cross-sectional Structure of Partitioning Wall)

The partitioning wall 110 may have various cross-sectional structures configured to achieve high sound insulation characteristics and high heat insulation characteristics. An exemplary cross-sectional structure of the partitioning wall 110 is described below.

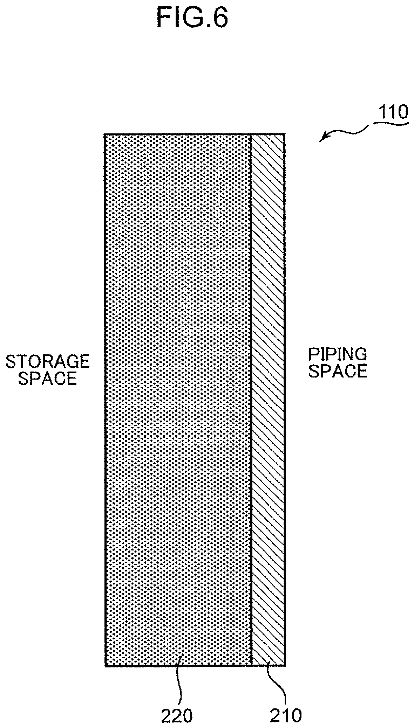

FIG. 6 is a schematic vertical cross-sectional view of the partitioning wall 110. An exemplary cross-sectional structure of the partitioning wall 110 is described with reference to FIG. 6.

The partitioning wall 110 includes a base plate 210 and a sound insulation layer 220. The base plate 210 may form the outer surface of the partitioning wall 110. The sound insulation layer 220 may form the inner surface of the partitioning wall 110. The base plate 210 may be formed from heat resistant resin. Fiber glass may be contained in the heat resistant resin for achieving a high mechanical strength. The principles of the present embodiment are not limited to a specific composition of the base plate 210.

The sound insulation layer 220 is fixed to the base plate 210. The sound insulation layer 220 has sound insulation characteristics (ability of reducing a level of sound transmitted from the storage space to the piping space) higher than that of the base plate 210. The sound insulation layer 220 may be closer to the engine (not shown) than the base plate 210. Consequently, a level of noise generated from the engine is reduced by the sound insulation layer 220 before the noise reaches the base plate. The sound insulation layer 220 may be formed by fiber glass or another material capable of achieving excellent sound insulation characteristics. The principles of the present embodiment are not limited to a specific composition of the sound insulation layer 220.

The sound insulation layer 220 may be thicker than the base plate 210. When the sound insulation layer 220 is thick, excellent sound insulation characteristics are obtained. The thickness of the sound insulation layer 220 may be determined, taking into consideration the level of noise, which may be generated from the engine. When the level of noise generated from the engine is high, the sound insulation layer 220 may be thick. When the level of noise generated from the engine is low, the sound insulation layer 220 may be thin. The principles of the present embodiment are not limited to a specific thickness of the sound insulation layer 220.

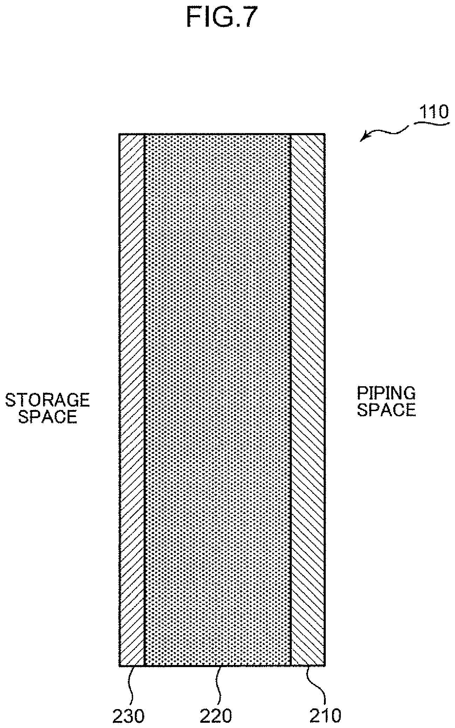

FIG. 7 is a schematic vertical cross-sectional view of the partitioning wall 110. An exemplary cross-sectional structure of the partitioning wall 110 is described with reference to FIGS. 1, 6 and 7.

When the sound insulation layer 220 is formed from fiber glass, the sound insulation layer 220 itself has high heat insulation characteristics. However, if the engine is in a very high temperature state, there may be insufficient heat insulation characteristics when the sound insulation layer 220 is used alone. In this case, the partitioning wall 110 may include a heat insulation layer 230 in addition to the base plate 210 and the sound insulation layer 220. The heat insulation layer 230 which forms the inner surface of the partitioning wall 110 is superior in heat insulation characteristics to the base plate 210 and the sound insulation layer 220. For example, the heat insulation layer 230 may be an aluminum layer. Dimples may be formed in a surface of the aluminum layer. Various techniques for improving the heat insulation characteristics may be applied to selection of a material for use in the heat insulation layer 230, and a surface structure of the heat insulation layer 230. Therefore, the principles of the present embodiment are not limited to a specific composition and a specific structure of the heat insulation layer 230.

The heat insulation layer 230 is laminated on the sound insulation layer 220. Therefore, the heat insulation layer 230 faces the storage space. Since heat from the engine is blocked by the heat insulation layer 230 before reaching the sound insulation layer 220, a level of heat transferred from the storage space to the piping space is significantly reduced.

When there is a low heat quantity generated from the engine, the cross-sectional structure described with reference to FIG. 6 may be applied to the entirety partitioning wall 110. When there is a high heat quantity generated from the engine, the cross-sectional structure described with reference to FIG. 7 may be applied to the entirety partitioning wall 110. Alternatively, a designer may design the partitioning wall 110 by combining the cross-sectional structures shown in FIGS. 6 and 7, taking into consideration a temperature distribution of the engine. For example, when a portion in which a temperature is usually high (e.g. an exhaust system) is arranged in the right half portion of the engine, the cross-sectional structure shown in FIG. 7 may be applied to the common wall 113 whereas the cross-sectional structure shown in FIG. 6 may be applied to the rest of the wall members of the partitioning wall 110.

The separation walls 115, 116A respectively described with reference to FIGS. 3 and 5 are formed so as to be inseparable from the intake pipes 120, 120A and the inner pipe portions 117, 117A. For example, the separation walls 115, 116A are integrally formed with the intake pipes 120, 120A and the inner pipe portions 117, 117A by resin molding techniques.

With regard to the embodiment, the partitioning wall 110 has the partition structure constituted by the wall members. Alternatively, a partitioning wall may be integrally formed by a single wall member.

The various exemplified techniques described in the context of the embodiment mainly include the following features.

An engine room structure of a vehicle according to the present invention includes: a partitioning wall configured to partition a storage space in which an engine is stored from a piping space to form an intake passage for supplying air to a combustion chamber of the engine; and an intake pipe which partially forms the intake passage in the piping space. The intake pipe extends along the partitioning wall, the intake pipe being integrally formed with the partitioning wall.

According to the aforementioned configuration, since the partitioning wall partitions the storage space in which the engine is stored from the piping space to form the intake passage to the engine, heat from the engine is less likely to be transferred from the storage space to the piping space. Since the intake pipe partially forms the intake passage in the piping space, which is partitioned from the storage space by the partitioning wall, the heat from the engine does not cause an excessive temperature rise of air in the intake pipe. Therefore, there is no excessive decrease in intake charge density. Since the intake pipe extends along the partitioning wall and is integrally formed with the partitioning wall, an unnecessary clearance is not formed between the intake pipe and the partitioning wall. Therefore, the intake passage is formed in a narrow space around the partitioning wall. Since a designer may form the intake passage even when various devices are densely arranged in the engine room, the engine room structure is applicable to various types of vehicles.

The engine room structure in the context of the aforementioned configuration may further include an air cleaner connected to an upstream end of the intake pipe. The partitioning wall may include a lateral wall portion situated on a side of the engine. The intake pipe may extend from the upstream end along the lateral wall portion, the intake pipe being integrally formed with the lateral wall portion.

According to the aforementioned configuration, since the air cleaner is connected to the upstream end of the intake pipe, air cleaned by the air cleaner is supplied to the engine. Since the intake pipe extends from the upstream end along the lateral wall portion on a side of the engine, heat transfer from the engine to the intake pipe is blocked by the lateral wall portion, so that there is no excessive rise in temperature of air cleaned by the air cleaner. Therefore, there is no excessive decrease in intake charge density. Since the intake pipe is integrally formed with the lateral wall portion, the intake passage is formed in a narrow space on a side of the partitioning wall. Since a designer may form the intake passage even when various devices are densely arranged in the engine room, the engine room structure is applicable to various types of vehicles.

With regard to the aforementioned configuration, the partitioning wall may include a rear wall portion behind the engine. The intake pipe may extend along the lateral wall portion and the rear wall portion, the intake pipe being integrally formed with the rear wall portion.

According to the aforementioned configuration, since the partitioning wall includes the rear wall portion behind the engine, heat and sound generated from the engine is less likely to be transferred to a passenger compartment behind the engine. Since the intake pipe extends along the lateral wall portion and the rear wall portion and is integrally formed with the rear wall portion, the intake passage is formed in a narrow space laterally and rearwardly of the partitioning wall. Since a designer may form the intake passage even when various devices are densely arranged in the engine room, the engine room structure is applicable to various types of vehicles. In addition, even when a long intake passage becomes necessary because of a design of a vehicle, since heat transfer from the engine to the air in the intake pipe is blocked by the lateral and rear wall portions, there is no excessive temperature rise in the intake pipe.

With regard to the aforementioned configuration, the partitioning wall may include a first wall portion, and a second wall portion formed to be separable from the first wall portion.

According to the aforementioned configuration, since the second wall portion of the partitioning wall is formed to be separable from the first wall portion of the partitioning wall, a designer may modify an arrangement position and/or a shape of the second wall portion when the partitioning wall does not fit to a structure of an engine room of a vehicle, and create a new partitioning wall in conformity with the shape of the engine room for the vehicle. Therefore, the engine room structure is applicable to various types of vehicles. In addition, since the first wall portion is also used for the new partitioning wall, it is promoted to share parts of the partitioning wall.

Since the intake pipe is integrally formed with the second wall portion, a designer may form the intake pipe near the partitioning wall. Therefore, the intake passage is formed in a narrow space around the partitioning wall. Since a designer may form the intake passage even when various devices are densely arranged in the engine room, the engine room structure is applicable to various types of vehicles.

With regard to the aforementioned configuration, the first wall portion may be a lateral wall portion situated on a side of the engine. The intake pipe may extend in the piping space from an air cleaner adjacent to the lateral wall portion.

According to the aforementioned configuration, since the air cleaner is situated in the piping space, heat of the engine is less likely to be transferred to the air cleaner. In short, an excessive temperature rise of air around the air cleaner is prevented by the partitioning wall. Since the intake pipe extending from the air cleaner forms the intake passage in the piping space, the heat from the engine does not cause an excessive temperature rise of air in the intake pipe. Therefore, there is no excessive decrease in intake charge density. In addition, since the air cleaner is adjacent to the lateral wall portion formed on a side of the engine, a passage for introducing external air drawn from the outside of the vehicle to the air cleaner is easily formed without being blocked by the partitioning wall.

With regard to the aforementioned configuration, the intake pipe may extend from the air cleaner along the first wall portion, the intake pipe being integrally formed with the second wall portion.

According to the aforementioned configuration, since the intake pipe extends from the air cleaner along the first wall portion and is integrally formed with the second wall portion, the intake passage extending over an area in which the first and second wall portions are arranged is formed in the piping space. In addition, an unnecessary clearance is not formed between the formed intake passage and the partitioning wall. Therefore, the intake passage is formed in a narrow space around the partitioning wall. Since a designer may form the intake passage even when various devices are densely arranged in the engine room, the engine room structure is applicable to various types of vehicles.

With regard to the aforementioned configuration, the second wall portion may include a rear wall portion behind the engine. The intake pipe may extend from the air cleaner along the partitioning wall, the intake pipe being integrally formed with the rear wall portion.

According to the aforementioned configuration, since the intake pipe extends from the air cleaner along the partitioning wall and is integrally formed with the rear wall portion situated behind the engine, the intake passage extending from the lateral wall portion over an area in which the rear wall portion is arranged is formed in the piping space. In addition, an unnecessary clearance is not formed between the formed intake passage and the partitioning wall. Therefore, the intake passage is formed in a narrow space around the partitioning wall. Since a designer may form the intake passage even when various devices are densely arranged in the engine room, the engine room structure is applicable to various types of vehicles.

With regard to the aforementioned configuration, the partitioning wall may include a sound insulation layer configured to reduce a level of sound transmitted from the storage space to the piping space.

According to the aforementioned configuration, since the partitioning wall includes the sound insulation layer configured to reduce a level of sound transmitted from the storage space to the piping space, sound generated from the engine is less likely to leak from the engine room.

With regard to the aforementioned configuration, the partitioning wall may include a heat insulation layer configured to reduce a level of heat transferred from the storage space to the piping space.

According to the aforementioned configuration, since the partitioning wall includes the heat insulation layer configured to reduce a level of heat transferred from the storage space to the piping space, heat from the engine is likely to be accumulated in the storage space. This improves warming efficiency of the engine by the partitioning wall.

### INDUSTRIAL APPLICABILITY

The principles of the aforementioned embodiment are appropriately used for various types of vehicles.

## Claims

1. An engine room structure (100) for a vehicle comprising:
a partitioning wall (110) configured to partition a storage space in which an engine (EG1, EG2) is storable from a piping space in which an intake passage for supplying air to a combustion chamber of the engine (EG1, EG2) is formed; and
an intake pipe (120, 120A) which partially forms the intake passage in the piping space,
wherein the intake pipe (120, 120A) extends along the partitioning wall (110), **characterized in that**
the intake pipe (120, 120A) is integrally formed with the partitioning wall (110).

2. The engine room structure (100) according to claim 1, further comprising
an air cleaner (AC1) connected to an upstream end of the intake pipe (120, 120A),
wherein the partitioning wall (110) includes a lateral wall portion, and
wherein the intake pipe (120, 120A) extends from the upstream end along the lateral wall portion, the intake pipe (120, 120A) being integrally formed with the lateral wall portion.

3. The engine room structure (100) according to claim 2,
wherein the partitioning wall (110) includes a rear wall portion, and
wherein the intake pipe (120, 120A) extends along the lateral wall portion and the rear wall portion, the intake pipe (120, 120A) being integrally formed with the rear wall portion.

4. The engine room structure (100) according to claim 1,
wherein the partitioning wall (110) includes a first wall portion, and a second wall portion formed to be separable from the first wall portion, and
wherein the intake pipe (120, 120A) is integrally formed with the second wall portion.

5. The engine room structure (100) according to claim 4,
wherein the first wall portion is a lateral wall portion and
wherein the intake pipe (120, 120A) extends in the piping space from an air cleaner (AC1) adjacent to the lateral wall portion.

6. The engine room structure (100) according to claim 5,
wherein the intake pipe (120, 120A) extends from the air cleaner (AC1) along the first wall portion, the intake pipe (120, 120A) being integrally formed with the second wall portion.

7. The engine room structure (100) according to claim 5,
wherein the second wall portion includes a rear wall portion, and
wherein the intake pipe (120, 120A) extends from the air cleaner (AC1) along the partitioning wall (110), the intake pipe (120, 120A) being integrally formed with the rear wall portion.

8. The engine room structure (100) according to any one of claims 1 to 7,
wherein the partitioning wall (110) includes a sound insulation layer (220) configured to reduce a level of sound transmitted from the storage space to the piping space.

9. The engine room structure (100) according to any one of claims 1 to 8,
wherein the partitioning wall (110) includes a heat insulation layer (230) configured to reduce a level of heat transferred from the storage space to the piping space.

10. A vehicle comprising an engine room structure (100) according to any one of the preceding claims.

## Patentansprüche

1. Motorraumstruktur (100) für ein Fahrzeug, aufweisend:
eine Trennwand (110), die dazu ausgestaltet ist, einen Stauraum, in dem ein Motor (EG1, EG2) untergebracht werden kann, von einem Rohrraum zu trennen, in dem ein Ansaugkanal zum Zuführen von Luft zu einer Brennkammer des Motors (EG1, EG2) gebildet ist; und
ein Ansaugrohr (120, 120A), das teilweise den Ansaugkanal in dem Rohrraum bildet,
wobei sich das Ansaugrohr (120, 120A) entlang der Trennwand (110) erstreckt,
**dadurch gekennzeichnet, dass**
das Ansaugrohr (120, 120A) integral mit der Trennwand (110) gebildet ist.

2. Motorraumstruktur (100) nach Anspruch 1, ferner aufweisend
einen Luftreiniger (AC1), der mit einem stromaufwärtigen Ende des Ansaugrohrs (120, 120A) verbunden ist,
wobei die Trennwand (110) einen Seitenwandabschnitt aufweist, und
wobei sich das Ansaugrohr (120, 120A) von dem stromaufwärtigen Ende entlang des Seitenwandabschnitts erstreckt, wobei das Ansaugrohr (120, 120A) integral mit dem Seitenwandabschnitt gebildet ist.

3. Motorraumstruktur (100) nach Anspruch 2,
wobei die Trennwand (110) einen Rückwandabschnitt aufweist, und
wobei sich das Ansaugrohr (120, 120A) entlang des Seitenwandabschnitts und des Rückwandabschnitts erstreckt, wobei das Ansaugrohr (120, 120A) integral mit dem Rückwandabschnitt gebildet ist.

4. Motorraumstruktur (100) nach Anspruch 1,
wobei die Trennwand (110) einen ersten Wandabschnitt und einen zweiten Wandabschnitt aufweist, der derart gebildet ist, dass er von dem ersten Wandabschnitt trennbar ist, und
wobei das Ansaugrohr (120, 120A) integral mit dem zweiten Wandabschnitt gebildet ist.

5. Motorraumstruktur (100) nach Anspruch 4,
wobei der erste Wandabschnitt ein Seitenwandabschnitt ist, und
wobei das Ansaugrohr (120, 120A) sich von einem Luftreiniger (AC1) aus, der benachbart zu dem Seitenwandabschnitt ist, in dem Rohrraum erstreckt.

6. Motorraumstruktur (100) nach Anspruch 5,
wobei sich das Ansaugrohr (120, 120A) von dem Luftreiniger (AC1) entlang des ersten Wandabschnitts erstreckt, wobei das Ansaugrohr (120, 120A) integral mit dem zweiten Wandabschnitt gebildet ist.

7. Motorraumstruktur (100) nach Anspruch 5,
wobei der zweite Wandabschnitt einen Rückwandabschnitt aufweist, und
wobei sich das Ansaugrohr (120, 120A) von dem Luftreiniger (AC1) entlang der Trennwand (110) erstreckt, wobei das Ansaugrohr (120, 120A) integral mit dem Rückwandabschnitt gebildet ist.

8. Motorraumstruktur (100) nach einem der Ansprüche 1 bis 7,
wobei die Trennwand (110) eine Schalldämmschicht (220) aufweist, die dazu ausgestaltet ist, einen Pegel des Schalls zu reduzieren, der von dem Stauraum zum Rohrraum übertragen wird.

9. Motorraumstruktur (100) nach einem der Ansprüche 1 bis 8,
wobei die Trennwand (110) eine Wärmedämmschicht (230) aufweist, die dazu ausgestaltet ist, einen Grad an Wärme zu reduzieren, die von dem Stauraum zum Rohrraum übertragen wird.

10. Fahrzeug, aufweisend eine Motorraumstruktur (100) nach einem der vorhergehenden Ansprüche.

## Revendications

1. Structure de compartiment de moteur (100) pour un véhicule comprenant :
une paroi de séparation (110) configurée pour séparer un espace de stockage dans lequel un moteur (EG1, EG2) peut être stocké d'un espace de tuyauterie dans lequel un passage d'admission destiné à fournir de l'air à une chambre de combustion du moteur (EG1, EG2) est formé ; et
une conduite d'admission (120, 120A) qui forme partiellement le passage d'admission dans l'espace de tuyauterie,
dans laquelle la conduite d'admission (120, 120A) s'étend le long de la paroi de séparation (110), **caractérisée en ce que**
la conduite d'admission (120, 120A) est formée d'un seul tenant avec la paroi de séparation (110).

2. Structure de compartiment de moteur (100) selon la revendication 1, comprenant en outre
un épurateur d'air (AC1) raccordé à une extrémité amont de la conduite d'admission (120, 120A),
dans laquelle la paroi de séparation (110) inclut une partie de paroi latérale, et
dans laquelle la conduite d'admission (120, 120A) s'étend à partir de l'extrémité amont le long de la partie de paroi latérale, la conduite d'admission (120, 120A) étant formée d'un seul tenant avec la partie de paroi latérale.

3. Structure de compartiment de moteur (100) selon la revendication 2,
dans laquelle la paroi de séparation (110) inclut une partie de paroi arrière, et
dans laquelle la conduite d'admission (120, 120A) s'étend le long de la partie de paroi latérale et de la partie de paroi arrière, la conduite d'admission (120, 120A) étant formée d'un seul tenant avec la partie de paroi arrière.

4. Structure de compartiment de moteur (100) selon la revendication 1,
dans laquelle la paroi de séparation (110) inclut une première partie de paroi, et une seconde partie de paroi formée pour être séparable de la première partie de paroi, et dans laquelle la conduite d'admission (120, 120A) est formée d'un seul tenant avec la seconde partie de paroi.

5. Structure de compartiment de moteur (100) selon la revendication 4,
dans laquelle la première partie de paroi est une partie de paroi latérale et
dans laquelle la conduite d'admission (120, 120A) s'étend dans l'espace de tuyauterie à partir de l'épurateur d'air (AC1) adjacent à la partie de paroi latérale.

6. Structure de compartiment de moteur (100) selon la revendication 5,
dans laquelle la conduite d'admission (120, 120A) s'étend à partir de l'épurateur d'air (AC1) le long de la première partie de paroi, la conduite d'admission (120, 120A) étant formée d'un seul tenant avec la seconde partie de paroi.

7. Structure de compartiment de moteur (100) selon la revendication 5,
dans laquelle la seconde partie de paroi inclut une partie de paroi arrière, et
dans laquelle la conduite d'admission (120, 120A) s'étend à partir de l'épurateur d'air (AC1) le long de la paroi de séparation (110), la conduite d'admission (120, 120A) étant formée d'un seul tenant avec la partie de paroi arrière.

8. Structure de compartiment de moteur (100) selon l'une quelconque des revendications 1 à 7,
dans laquelle la paroi de séparation (110) inclut une couche d'isolation phonique (220) configurée pour réduire un niveau de son transmis de l'espace de stockage à l'espace de tuyauterie.

9. Structure de compartiment de moteur (100) selon l'une quelconque des revendications 1 à 8,
dans laquelle la paroi de séparation (110) inclut une couche d'isolation thermique (230) configurée pour réduire un niveau de chaleur transférée de l'espace de stockage à l'espace de tuyauterie.

10. Véhicule comprenant une structure de compartiment de moteur (100) selon l'une quelconque des revendications précédentes.
